# EUROPEAN PATENT APPLICATION

(11) **EP 0 565 155 A1**
(43) Date of publication of application: **13.10.1993**
(21) Application number: 93200686.9
(22) Date of filing: 10.03.1993
(51) Int. Cl.: G11B 21/08, G11B 5/55, G05B 13/02

(54) **System and method for improved settling of a read/write transducer in a direct access storage device**

(30) Priority: 08.04.1992 US 865018
(71) Applicant: INTERNATIONAL BUSINESS MACHINES CORPORATION, Armonk, N.Y. 10504 (US)
(72) Inventor: Erickson, Kevin J., Rochester, Minnesota 55901 (US); Ottesen, Hal H., Rochester, Minnesota 55901 (US)
(74) Representative: Louet Feisser, Arnold

(57) **Abstract**

Method of and system for providing improved settling of a read/write head with respect to a selected track (14) on a disk (12). Responsive to the position error signal, a first signal proportional to the position error signal and a second signal proportional to a rate of change of the position error signal are estimated. The first and second signals are applied to a fuzzy logic controller (34), which utilizes the values for the first and second signals in membership functions relating to particular characteristic states to determine possibility weights relating to the same states. The possibility weights are further processed by application of rule action functions to generate a plurality of boost signals, which are then combined to generate gain adjustment signals for the Proportional-Integral-Derivative ("PID") controller (30).

## Description

The present invention relates to position control of a read/write transducer in a direct access storage device, and more particularly, to providing rapid and consistent settling of the position of the read/write transducer over a selected track on a storage media disk at the conclusion of a seek to that track. Still more particularly, the invention relates to utilization of a fuzzy logic controller to provide adaptive gain control to a proportional-integral-derivative controller.

A direct access storage device ("DASD") is one application for a feedback control system that exhibits difficulties in settling. Feedback control systems operate to achieve prescribed relationships between selected system variables by comparing functions of those variables and using the comparison to effect control. System variables are those quantities or conditions of the system which are subject to change. Examples of such variables include an electrical voltage level generated by an amplifier or physical force applied to an object by an actuator. In a DASD, the strength of the magnetic field generated by the voice coil in a rotary or linear actuator is such a system variable. Control is the governing of the response of a controlled subsystem. In a DASD, the position of an actuator, or more precisely, the substantially motionless position of a read/write transducer, carried by the actuator, centered over one of the plurality of concentric or spiral tracks of one of a plurality of disks, is the response of interest.

In a DASD settling problems arise in connection with movement of the read/write transducer to a new track. Because access to files on the track depends upon substantially settled positioning of the transducer, performance of the system is enhanced by minimizing the time taken to move the transducer between tracks and to settle. The system is a feedback system in which proportional-integral-derivative ("PID") controllers, implemented through appropriately programmed digital signal processors, play a significant role as a control element. Optimal tuning of the PID controller is not possible for a number of reasons. Seek operations occur at different times and between different tracks. They do not occur in a physically constant system. Among items which introduce variability to the process are: (1) temperature, which changes such factors as read/write head to disk alignment, actuator bearing stiffness, shock mount stiffness, et cetera; (2) changes in seek distance; (3) changes in disk runout; (4) nonlinearities in actuator bearings; and other factors. Output error command PID controllers exhibit a slow response when designed to minimize overshoot, and they exhibit substantial overshoot when designed to provide a fast response.

It is therefore one object of the present invention to provide position control of a read/write transducer in a direct access storage device.

It is another object to provide rapid and consistent settling of the read/write transducer relative to tracks on a storage media disk at the conclusion of a seek operation.

It is still another object of the invention to provide utilization of a fuzzy logic controller to provide adaptive gain control for a proportional-integral-derivative controller in a direct access storage device.

The forgoing objects are achieved as is now described. In a disk drive control system including a read/write head, an actuator for the read/write head, a position signal generator for the read/write head, a source for a reference input signal for a desired position of the read/write head, a summer for combining the position signal and the reference input signal to generate a position error signal, and a proportional-integral-derivative controller for processing selected input signals including the position error signal (the 'proportional' signal), a signal to the rate of change in position (the 'derivative' signal) and a signal proportional to the integral of the position error signal for generating an actuator signal controlling position of the read/write head, a method of providing improved settling of a read/write head with respect to a selected track on one or more disks is taught.

Responsive to the position error signal, a first signal proportional to the position error signal and a second signal proportional to a rate of change of the position error signal are provided. The first and second signals are applied to a fuzzy logic controller, which utilizes the values for the first and second signals in membership functions relating to particular characteristic states to determine possibility weights relating to the same states. The possibility weights are further processed by application of rule action functions to generate a plurality of boost signals, which are then combined to generate gain adjustment signals for the Proportional-Integral-Derivative ("PID") controller. Gains relating to both position error and rate of change in position error in the PID controller are then adjusted in response to the gain adjustment signals. The above as well as additional objects, features, and advantages of the invention will become apparent in the following detailed description.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 depicts a mixed pictorial illustration and simplified block diagram for a disk drive and its control features;
Figure 2 depicts a logical flow chart for operation of a fuzzy logic controller;
Figure 3 depicts graphs illustrating a rule executed upon by the fuzzy logic controller;
Figure 4 depicts graphs illustrating a second rule executed upon by the fuzzy logic controller;
Figure 5 depicts graphs illustrating a third rule executed upon by the fuzzy logic controller;
Figure 6 depicts graphs illustrating a fourth rule executed upon by the fuzzy logic controller;
Figure 7 depicts a graph illustrating settling rates for a prior art disk drive controller; and
Figure 8 depicts a graph illustrating settling rates for a simulation of the disk drive controller utilizing the method of the present invention.

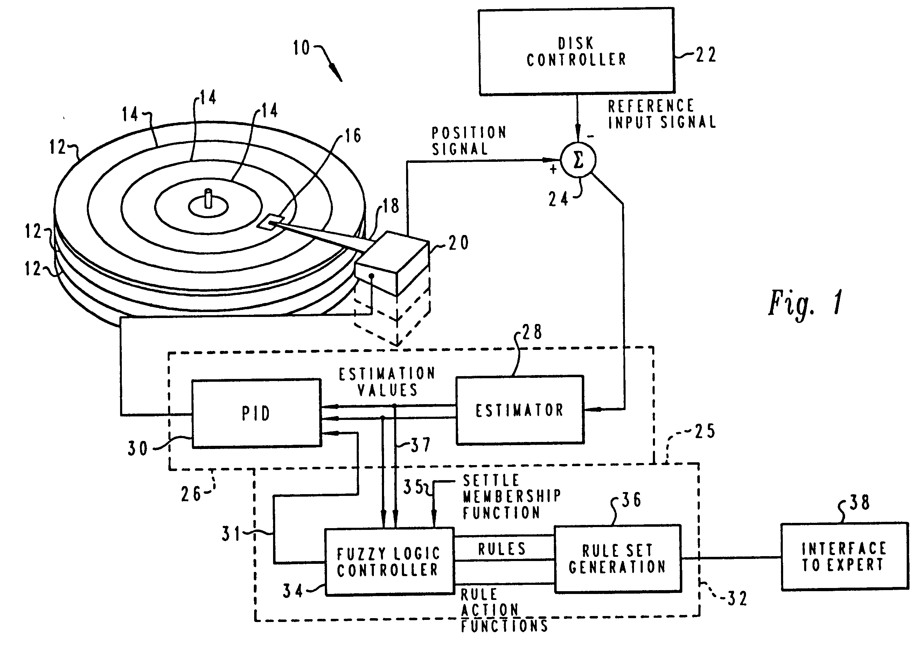

With reference now to the figures, and in particular to Figure 1, there is depicted a disk drive 10 including features illustrated pictorially and in block diagrams. Disk drive 10 includes one or more rotatable magnetic or optical media disks 12 on which are a plurality of concentric or spiral tracks 14. Data files are written on and recovered from tracks 14 by a separate read/write head 16 for each disk. Read/write head 16 is carried between positions centered over a currently selected track at the end of an armature arm 18. By reading back data stored along a track 14, read/write head 16 positioning information may be recovered. Armature arm 18 may be moved linearly orrotationally by an actuation controller 20.

A read back signal is generated as disk 12 moves under read/write head 16. Positional information is derived from the read back signal in a manner well known in the art and is passed as a feedback signal to a summer 24. Summer 24 combines the position information signal with a reference input signal from disk controller 22 to generate a position error signal. The position information signal, the reference input signal and the position error signal are all digital signals and are, accordingly, updated once each sampling period. The signals are used in all operating modes of disk drive 10 which include, a seek mode, a settle mode and a tracking mode. Seek mode is entered upon instruction to change the track over which the read/write head is positioned. Drive operation passes from seek to settle mode to control the final stages of repositioning of read/write head 16. Tracking mode relates to maintaining position of read/write head 16 over a track.

Disk drive 10 further includes a digital signal processor 25 through which are realized, in accordance with well known programming techniques, a forward controlling element 26 including an estimator 28 and a proportional-integral-derivative ("PID") controller 30. A TMS 320 digital signal processor ("DSP") available from Texas Instruments of Dallas, Texas is a preferred processor for this application.

Estimator 28 may take one of several forms including passing an input signal on in its unaltered, measured form. The output signals from estimator 28 are nonetheless considered to be estimation signals whether processed or not. Estimator 28 passes a first signal proportional to the position error signal from summer 24 and further generates a second signal proportional to the rate of change of the position error signal. All estimation signals used are made available to PID controller 30 and to a fuzzy settle assist processor 32.

Fuzzy settle assist processor 32 includes a fuzzy logic controller 34 and a rule set generator 36, both realized in digital signal processor 25. Fuzzy settle assist processor 32 is active during the settle mode, during which it provides gain adjustment signals to PID controller 30 on signal line 31. Fuzzy logic controller 34 receives indication of disk drive operation in the settle mode over a control line 35, which may be supplied from disk controller 22 or determined within the estimator process 28. Fuzzy logic controller operates on first and second estimation signals provided over signal lines 37 from estimator 28.

Gain adjustment is made on the basis of factors relating to read/write head 16 position relative to a desired position and velocity (radially inward or outward). Each variable is represented by an estimation signal. Fuzzy logic controller 34 utilizes rules from generator 36. Application of a rule includes the preliminary execution of a plurality of membership functions. Membership functions operate to assign possibility weights to the variables represented by the estimation signals. The possibility weights relate to the degree to which a variable is considered as belonging to a particular classification for that variable, such as "fast" as a characterization for velocity of read/write head 16, or "far removed" as an appropriate characterization of position of the head.

Fuzzy logic controller 34 obtains the membership functions from rule set generator 36. The rule set is established by expert input through an interface 38.

The results of execution of the membership functions provide the inputs to one or more If/THEN operations. Where a plurality of IF/THEN statements occur for a particular rule, a rule action operation is utilized by controller 34 to combine the results from the IF/THEN statements to generate the final gain adjustment signal. Such combination can occur in one of several forms, including: (1) taking the maximum result from the IF/THEN statements; (2) determining an average of the results; or, (3) determining a weighted average for the results, among others.

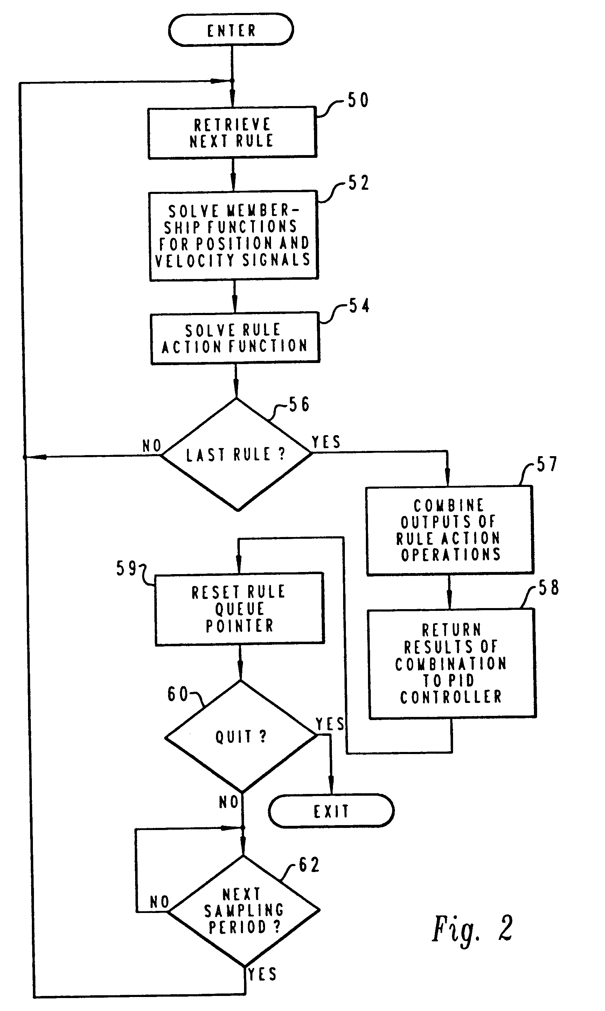

Figure 2 depicts a logical flow chart for the operation of fuzzy logic controller 34. Execution of the routine begins upon entry into the settle mode with retrieval of the next rule from a rule queue at step 50. Next, at step 52, membership functions relating to specific instances of the rule are solved for the contemporaneous samples for read/write head 16 position and velocity. At step 54, the results from determination of the IF/THEN statements are used as inputs to the rule action function for the present rule to determine the contribution of the variables to the gain adjustment signals. Next, at step 56, it is determined if the rule just processed is the last from the queue. If not, processing is returned to step 50 to process the next rule.

Once the last rule has been processed for a sampling period, the gain adjustment signals are determined by combination of the outputs of the rule/action operations (step 57). The gain adjustment signals are then returned to PID controller 30 (step 58) and the pointer to the rule queue is reset (step 59). Next, at step 60 it is determined if disk drive 10 has exited from the settle mode, and if "YES", the process discontinues. If a settle mode remains indicated, step 62 loops the process until the next set of position and velocity samples is received, at which point processing is returned to step 50 to process the rule queue for the new sample set. Alternatively, processing of gain adjustment signals can be discontinued responsive to exit from the settle mode with a resetting of the rule queue pointer and discontinuance of the process of Figure 2.

The nature of the rule set utilized for the fuzzy logic processor 32 is set forth by way of example for a specific embodiment of the invention. Settle mode is entered when the seek mode has moved read/write head 16 to within 0.8 track widths of the destination track. At this distance the seek algorithm hands control to a settle algorithm, which in turn activates the fuzzy settle assist processor 34. As noted above, the settle algorithm controls the actuator until the final desired position is reached, whereupon control is handed to a tracking algorithm. During tracking fuzzy logic controller 34 is again inactive. The modification of control effected by the fuzzy settle assist processor 32 operates by modifying the control gains of the PID controller 30 for the position and velocity variables of the system during operation in the settle mode. Modification of the control gains is based upon evaluation of the system variables against four fuzzy logic rules. The rules compensate for certain situations that tend to degrade system performance in the settle mode. PID controller 30 includes a velocity gain parameter acting upon the rate of change in position (velocity) estimation signal and a position gain parameter acting upon the position error signal. Each gainparameter is subject to modification based upon two of the four fuzzy logic rules utilized in the preferred embodiment.

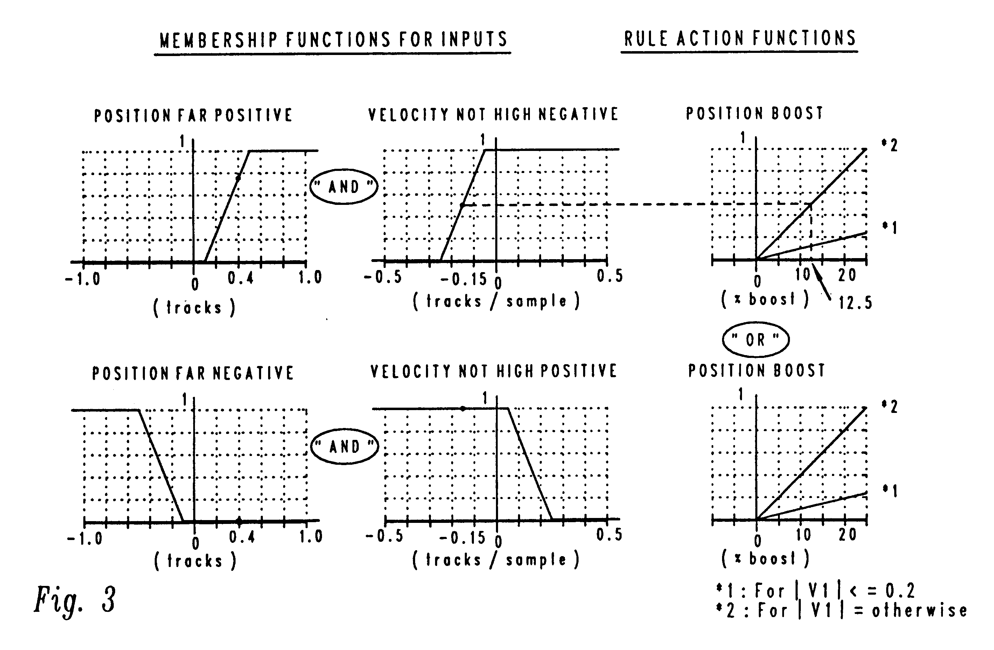

Figures 3-6 illustrate the four fuzzy logic rules utilized in the invention, their associated membership functions, and the rule action functions utilized in generation of the gain adjustment signals. Each of the four rules has a plurality instances, that is, defined circumstances of applicability of the rule. Each of the four rules utilize membership functions to relate the read/write head 16 position and velocity information obtained each sampling period to degrees of membership in the characteristic. The maximum degree of membership, or possibility weight, respecting a characteristic that can be assigned to a sample is 1. The minimum degree is zero. The ranges to which weights of 0 and 1 apply may be obtained from an expert or deduced from probability theory. A range of fractional weights between the ranges where the maximum and minimum weights apply is also defined in terms of a slope or other gradation. Results obtained from the membership functions are applied to rule action functions.

Figures 3-6 include graphs relating to each of the rules. Each rule has four membership functions and two rule action functions. For each rule instance, or case of specific applicability of a rule, two membership functions are utilized to determine the degree of membership in a characterization for the position variable and two are utilized to determine the degree of membership of the velocity variable. Three logical operations are used in expressing the functions. The operators are "AND", "OR", and "NOT." The definitions of these operations for fuzzy logic differ from that for the same symbols in Boolian algebra. An "AND" operation returns the minimum value from a set. The "OR" operator returns the maximum value from a set.

The "NOT" operation is defined as subtracting the value for a parameter from 1.

Figure 3 illustrates a first rule, which is for a stalled arrival case. A stalled arrival is one where the position of the read/write head 16 is far from its desired position and the velocity is not high in the direction of the desired position. The appropriate response is a boost in the position control gain of the PID controller 30. There are two instances where the read/write head is both far from its desired position and its velocity is not high in the direction of the desired position. These are instances of rules defined by two membership functions as shown in the illustration. In the first, the position of read/write head 16 is far positive and the velocity 15 not high negative. In the second instance, the position is far negative and the velocity not high positive.

Except for the membership functions, the form of the rule instances is identical. Both of the rule instances include a pair of membership functions logically linked by the fuzzy logical operator "AND." As an example, head position is taken as 0.4 tracks positive and velocity is -0.15 tracks per sample. A position of 0.4 tracks to the positive side of the desired track is considered to have a degree of membership of approximately 0.7 in relation to the characteristic "position far positive" and a degree of membership of zero with respect to the characterization "position far negative." A velocity of -0.15 tracks per sample has a degree of membership of 0.5 to the characterization of velocity as "not high negative" and has a degree of membership of 1.0 with respect to the characterization of velocity a "not high positive." The two membership functions thus have results of .5 and 0, respectively, which are related to two rule action functions for determination of boost components. One position boost graph yields a percentage of boost result of 12.5% and the second yields 0. Upon an "OR" operation on the two results the maximum 12.5% boost is obtained.

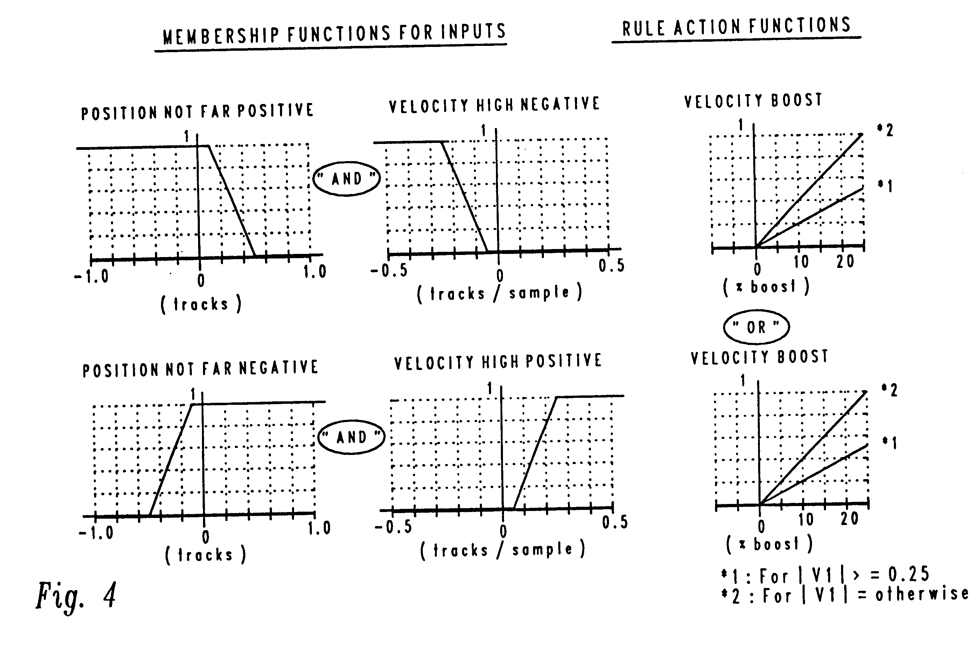

Figure 4 illustrates a second rule, which relates to modification of the gain relating to velocity control in PID controller 30. The rule is for the "hot arrival" case where the position of the read/write head is close to its desired position but the velocity is high. The rule has two defined instances with primary applicability. One occurs where read/write head 16 is in a position slightly positive relative to the desired track and velocity is highly negative. A second occurs in the inverse situation. Again, two membership functions are provided for each instance, including a velocity input and a position input, linked by a fuzzy logical operation "AND." The result of comparison of a particular variable to the membership functions provides an input into the rule action functions to generate a velocity boost. The two results returned from the velocity boost graphs are then subjected to a fuzzy logic operation "or" to locate the maximum which is applied to the gain adjustment signal to the velocity gain and PID controller 30.

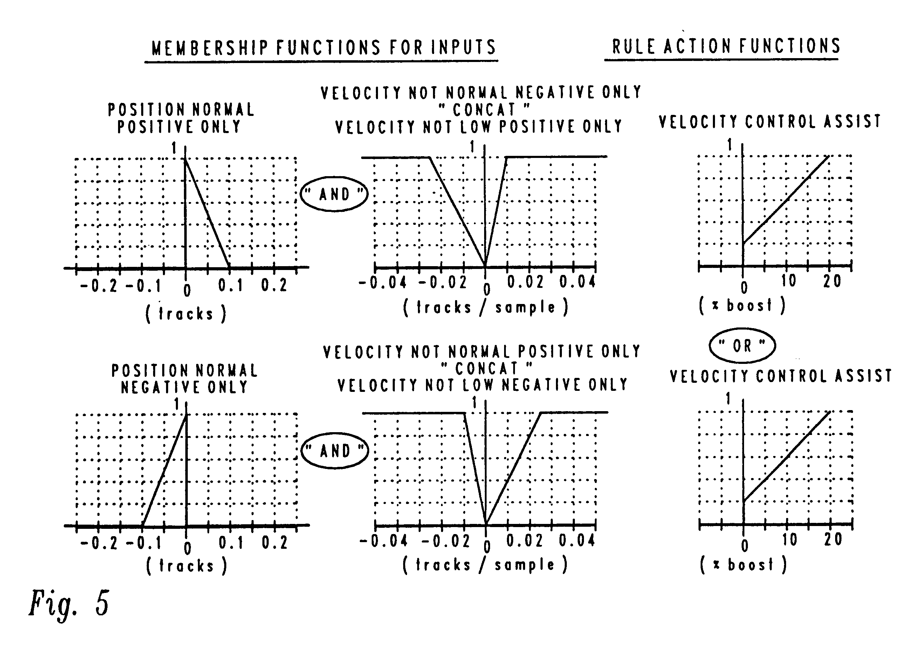

Figure 5 illustrates a rule relating to a read/write head which is in a position over its target track, but moving off track quickly. For one rule instance, membership functions are characterized as a "position normal positive only" and "position normal negative only" for which the maximum degree of membership occurs only at a perfectly centered position over a target track. For "position normal positive only", a degree of membership exists for positions on or to the positive side of the desired track. The velocity membership functions are concatenations of two relationships, here "velocity not normal negative only" concatenated with "velocity not low positive only." The desired velocity is 0. The membership function returns a degree of membership of 0 for that velocity, but some positive degree of membership for any other velocity rising to a weight of 1 at negative 0.025 tracks per sample and at positive 0.01 tracks per sample. Again, the membership functions return values which may be used to provide an input to rule action functions to return a percentage of boost to the position gain feature of the PID controller.

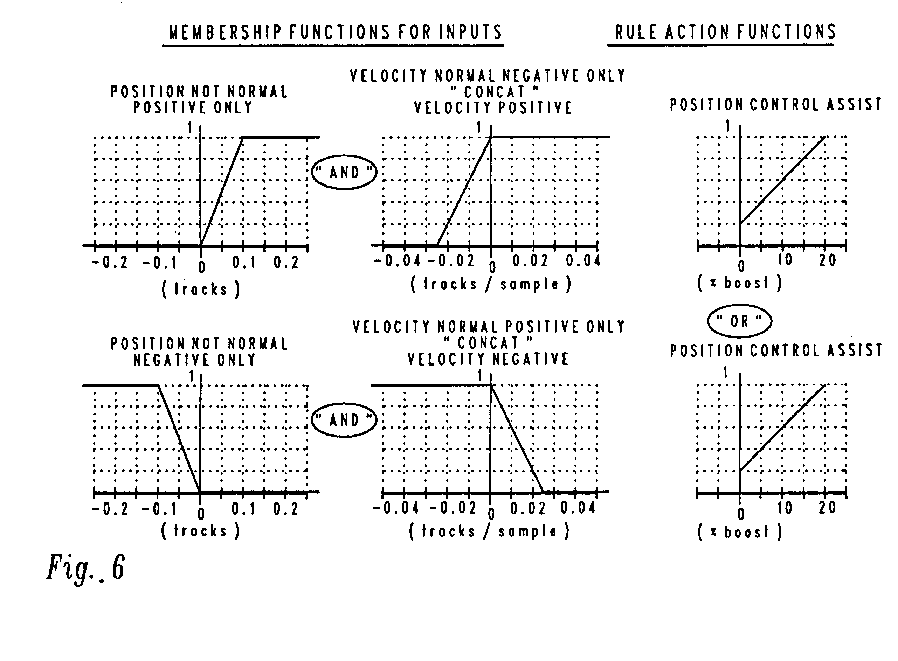

Figure 6 illustrates a rule for the situation of "off track and not moving back quickly", which again has two instances. The first instance occurs when a position is "not normal-positive only" and velocity is "normal-negative only" concatenated with "velocity positive." The second instance occurs for a position "not normal-negative only" and "velocity normal-positive only" concatenated with "velocity negative." Again the gain of position control in PID controller 30 is boosted in response to return of nonzero degrees of membership from either membership function.

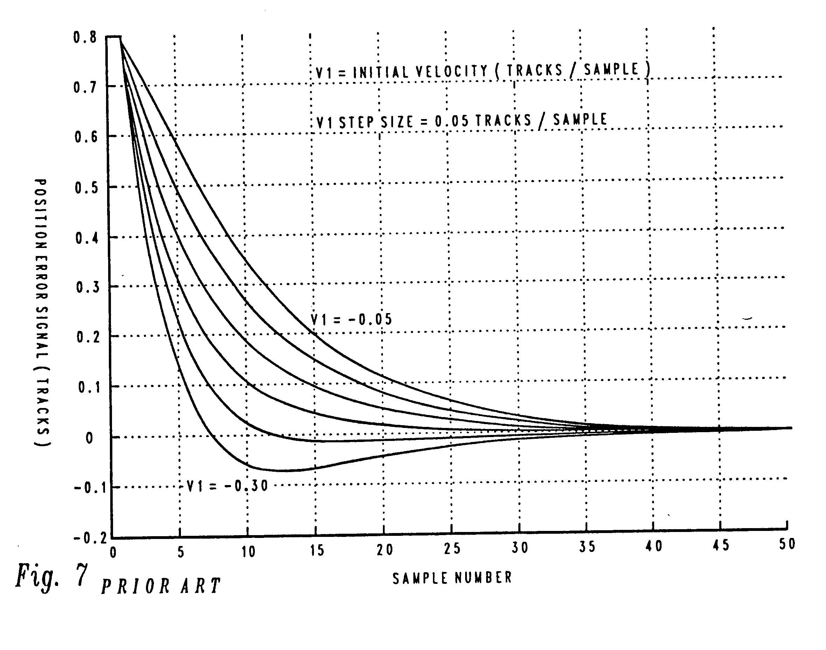

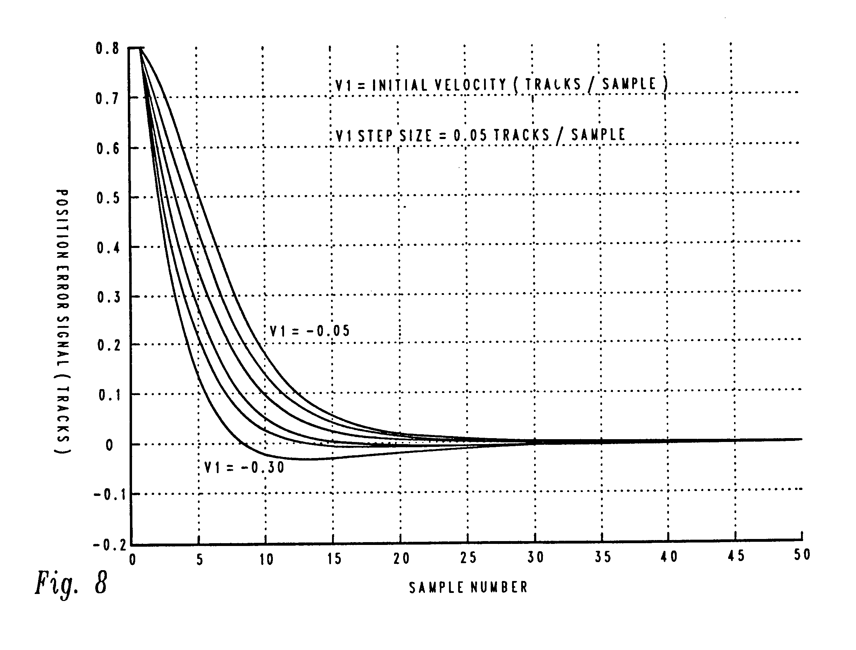

Figure 7 represents a settling response simulation of a prior art control system for a disk drive. Figure 8 illustrates response of a control system for a disk drive in accordance with the present invention. The vertical axis is graduated in terms of tenths of a track for each graph. The horizontal axis of each graph, the time line, is graduated in sample periods. Each line in the graph represents a different initial velocity of a read/write head upon entry to the settle mode, with a step size between tracks of 0.05 tracks per sample. The graph lines range from one representing initial velocity of -0.05 tracks per sample to one representing an initial velocity of -0.30 tracks per sample. The same range of initial velocities and step size are used in Figure 8 as in Figure 7. For the invention represented by Figure 8, substantially settled operation is obtained by about the 30th sample, while the prior art controller, represented by Figure 7 settled operation requires between 40 and 45 samples.

Although the invention has been described with reference to a specific embodiment, this description is not meant to be construed in a limiting sense. Various modifications of the disclosed embodiment as well as alternative embodiments of the invention will become apparent to persons skilled in the art upon reference to the description of the invention. It is therefore contemplated that the appended claims will cover any such modifications or embodiments that fall within the true scope of the invention.

## Claims

1. A forward controlling subsystem for providing improved settling of a directly controlled variable of a control system, wherein the control system combines a feedback measurement signal of the directly controlled variable and a reference input signal to generate an actuation signal, the forward controlling subsystem comprising:
means responsive to the actuation signal for processing at least a first estimation signal;
fuzzy logic controller means responsive to at least the first estimation signal for generating an adjustment signal;
proportional-integral-derivative means responsive to at least the first estimation signal for generating a modified actuation signal; and
means responsive to the adjustment signal for adjusting the modified actuation signal.

2. A forward controlling subsystem as set forth in Claim 1, wherein the means for adjusting comprises means for changing signal gains within the proportional-integral-derivative means.

3. A forward controlling subsystem as set forth in Claim 2, wherein the means for processing comprises means for estimating an estimation signal proportional to the actuation signal and an estimation signal proportional to the time rate of change of the actuation signal.

4. A disk drive control system for providing improved settling of a read/write head with respect to a selected track on a disk, the disk drive control system comprising:
means for generating a position signal for the read/write head;
means for generating a reference input signal for a desired position of the read/write head;
means for combining the position signal and the reference input signal to generate a position error signal;
estimation means responsive to the position error signal for generating a first signal proportional to the position error signal and a second signal proportional to a time rate of change of the position error signal;
fuzzy logic controller means responsive to the first signal and to the second signal for generating gain adjustment signals; and proportional-integral-derivative means taking the first and second signals as inputs and responsive to the gain adjustment signals for generating an actuation signal.

5. A disk drive control system for providing improved settling of a read/write head with respect to a selected track on a disk as set forth in Claim 4, the disk drive control system further comprising:
a plurality of rules defining responses to states of the first and second signals,
a plurality of membership functions for relating current sampled values of the first and second signals to selected states of the first and second signals in terms of membership possibilities, and at least a first rule action function for each rule for relating membership possibilities to the gain adjustment signal.

6. A disk drive control system for providing improved settling of a read/write head with respect to a selected track on a disk as set forth in Claim 5, wherein the fuzzy logic controller means includes means responsive to values for the first and second signals for executing the membership functions to determine membership possibilities for the first and second signals in the selected states; and means for executing the rule action functions using the membership possibilities to generate the gain adjustment signals.

7. A disk drive control system for providing improved settling of a read/write head with respect to a selected track on a disk as set forth in Claim 5, and further comprising means for defining rules.

8. In a disk drive control system including a read/write head, means for generating a position signal for the read/write head, means for generating a reference input signal for a desired position of the read/write head, means for combining the position signal and the reference input signal to generate a position error signal, and a proportional-integral-derivative controller, a method of providing improved settling of a read/write head with respect to a selected track on a disk comprising the steps performed by a data processing system of:
responsive to the position error signal, estimating a first signal proportional to the position error signal and a second signal proportional to a rate of change of the position error signal;
responsive to the first and second signals, generating gain adjustment signals;
responsive to the gain adjustment signals, adjusting the gains of a proportional- integral-derivative controller for position and rate of change; and applying the first and second signals to the proportional-integral-derivative controller to generate a modified actuation signal.

9. A method of providing improved settling of a read/write head with respect to a selected track on a disk as set forth in Claim 8, wherein the step of generating a gain adjustment signal comprises the further steps performed by a data processing system of:
defining a plurality of characteristics for values of the first and second signals;
responsive to the first and second signals, determining a possibility weight for each signal relative to each characteristic defined in the defining step;
responsive to determination of the possibility weights, generating at least a first boost component for the gain adjustment signals;
and
combining selected boost components to generate each gain adjustment signal.

10. A method of providing improved settling of a read/write head with respect to a selected track on a disk as set forth in Claim 9, wherein the step of combining the boost components further comprises the step performed by a data processing system of utilizing the selected boost component having a maximum value for a selected gain adjustment signal.

11. In a disk drive control system including a read/write head, means for generating a position signal for the read/write head, means for generating a reference input signal for a desired position of the read/write head, means for combining the position signal, the reference input signal to generate a position error signal, and a proportional-integral-derivative controller, a data program product for providing improved settling of a read/write head with respect to a selected track on a disk comprising media storing:
instruction means, responsive to the position error signal, for estimating a first signal proportional to the position error signal and a second signal proportional to a rate of change of the position error signal;
instruction means, responsive to the first and second signals, for generating gain adjustment signals;
instruction means, responsive to the gain adjustment signals, for adjusting the gains of a proportional-integral-derivative controller; and instruction means for causing application of the first and second signals to the proportional-integral-derivative controller to generate a modified actuation signal.

12. A data program product for providing improved settling of a read/write head with respect to a selected track on a disk as set forth in Claim 11, wherein instruction means for generating a gain adjustment signal further comprises:
instruction means for defining a plurality of characteristics for values of the first and second signals;
instruction means, responsive to the first and second signals, for determining a possibility weight for each signal relative to each characteristic defined in the defining step;
instruction means, responsive to determination of the possibility weights, for generating at least a first boost component for a selected gain adjustment signal; and
instruction means for combining the selected boost components to generate a gain adjustment signal.

13. A data program product for providing improved settling of a read/write head with respect to a selected track on a disk as set forth in Claim 12, wherein the instruction means for combining the boost components further comprises instruction means for selecting the maximum boost component as a value for the gain adjustment signal.

14. A control system for positioning a read/write head in a disk drive, wherein the control system operates in three modes including, a seek mode for moving the read/write head to within a predetermined distance of a target track on a disk, a settle mode occurring after a seek mode for controlling movement of the read/write head from the predetermined distance to a position over the desired track, and a tracking mode for maintaining position of the read/write head over the target track, the control system comprising:
means responsive to position of the read/write head for generating a position error signal;
compensating means responsive to the position error signal for generating an actuation signal;
means for estimating a rate of change signal for the position error signal; and means responsive to entry of the control system into settle mode for taking the position error signal and the estimation of the rate of change for modifying the actuation signal.

15. A control system for positioning a read/write head in a disk drive as set forth in Claim 14, wherein the means for modifying the actuation signal generates and applies a gain adjustment signal to the compensating means.

16. A control system for positioning a read/write head in a disk drive as set forth in Claim 15, wherein the means for modifying the actuation signal comprises:
means for defining a plurality of characteristics for values of the position error signal and of the rate of change signal;
means, responsive to the position error signal and to the rate of change signal, for determining a possibility weight for each signal relative to a predetermined characteristic;
means, responsive to determination of the possibility weights, for generating at least a first boost component for the gain adjustment signal; and means for combining the boost components to generate the gain adjustment signal.
